# EUROPÄISCHE PATENTSCHRIFT

(11) **EP 3 538 399 B1**
(45) Veröffentlichungstag und Bekanntmachung des Hinweises auf die Patenterteilung: **09.09.2020**
(21) Anmeldenummer: 17804106.7
(22) Anmeldetag: 09.11.2017
(51) Int. Cl.: B60R 1/00

(54) **FAHRZEUGSCHEIBE MIT LICHTLEITKÖRPER FÜR EINEN SENSOR**
VEHICLE WINDOW WITH LIGHT CONDUCTION BODY FOR A SENSOR
VITRE DE VÉHICULE COMPRENANT UN CORPS CONDUCTEUR DE LUMIÈRE POUR UN CAPTEUR

(30) Priorität: 14.11.2016 EP 16198566
(43) Veröffentlichungstag der Anmeldung: 18.09.2019
(73) Patentinhaber: SAINT-GOBAIN GLASS FRANCE, 92400 Courbevoie (FR)
(72) Erfinder: MELCHER, Martin, Mountain View, CA 94041 (US); YEH, Li-Ya, 52511 Geilenkirchen (DE); ARNDT, Martin, 52066 Aachen (DE); EFFERTZ, Christian, 52080 Aachen (DE)
(74) Vertreter: Feist, Florian Arno
(86) Internationale Anmeldenummer: PCT/EP2017/078750
(87) Internationale Veröffentlichungsnummer: WO 2018/087223

(56) Entgegenhaltungen:
- EP-A1- 2 390 141
- WO-A1-00/55010
- WO-A1-2011/065104
- DE-A1- 10 219 393
- DE-A1-102006 010 672
- DE-A1-102008 020 954

## Beschreibung

Die Erfindung betrifft eine Fahrzeugscheibe, ein Verfahren zu ihrer Herstellung und ihre Verwendung.

Moderne Fahrzeuge werden mit einer steigenden Anzahl an optischen Sensoren ausgestattet, deren Signale zur Unterstützung des Fahrers verwendet werden. Beispiele solcher Sensoren sind Kameras wie Fahrspurkameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkannte. Die Sensoren werden durch einen opaken Abdeckdruck auf der Windschutzscheibe verdeckt. Dazu ist der übliche periphere, rahmenartige Abdeckdruck, der in erster Linie als UV-Schutz für den Montagekleber der Windschutzscheibe dient, im Bereich der Sensoren deutlich in Richtung der Scheibenmitte vergrößert.

Herkömmliche Sensoren, insbesondere Kameras, sind so an der Windschutzscheibe angebracht, dass ihre Detektionsrichtung horizontal verläuft. Da die Windschutzscheibe stark geneigt im Fahrzeug installiert ist, beispielsweise mit einem Einbauwinkel von 60° zur Vertikalen, schließt die Detektionsrichtung des Sensors einen sehr spitzen Winkel von etwa 30° mit der Windschutzscheibe ein. Daraus resultiert ein vergleichsweise großer, im Wesentlichen trapezförmiger sogenannter Sensorbereich (oder Sensorfenster) der Windschutzscheibe. Der Sensorbereich ist derjenige Bereich der Windschutzscheibe, durch den verlaufende Strahlung durch den Sensor detektiert wird. Der Sensorbereich der Windschutzscheibe ist also der Bereich, der im Detektionsstrahlengang des Sensors liegt.

Je mehr Sensoren an der Scheibe befestigt werden sollen, desto mehr Fläche der Windschutzscheibe wird durch die Summe der Sensorbereiche eingenommen und desto größer muss der Abdeckdruck ausgebildet werden, der die Sensoren verdecken soll. Dadurch wird allerdings die Gesamt-Lichttransmission durch die Scheibe herabgesetzt und sie wirkt häufig ästhetisch weniger ansprechend.

Der Sensorbereich der Windschutzscheibe lässt sich dadurch verkleinern, dass der Winkel zwischen Sensor und Windschutzscheibe möglichst groß gewählt wird, idealerweise 90°. Damit die Detektionsrichtung des Sensors aber horizontal nach vorne gerichtet bleibt, muss der Detektionsstrahlengang in oder hinter der Scheibe entsprechend gelenkt werden. Es sind Lichtleitkörper bekannt, die zwischen dem Sensor und der Scheibe angebracht werden und aufgrund ihres Brechungsindex horizontal durch die Scheibe fallende Strahlung in den Sensor zu leiten. EP 2181023 A1 offenbart einen solchen Lichtleitkörper aus Silikon, der an einer Windschutzscheibe angebracht ist. Ein Lichtleitkörper aus Glas ist beispielsweise aus US 2008/0284850 A1 bekannt. Der Lichtleitkörper ist dort über eine Kunststofffolie mit Heizstrukturen mit der Windschutzscheibe verbunden, wahrscheinlich verklebt.

Auch DE102008020954A1 offenbart eine Windschutzscheibe mit einem Lichtleitkörper aus Glas, der an der innenraumseitigen Oberfläche angeklebt ist.

Angeklebte Lichtleitkörper sind nicht sonderlich stabil und lösen sich leicht ungewollt von der Scheibe, beispielsweise beim Transport. Sie werden daher typischerweise erst beim Einbau der Scheibe in das Fahrzeug zusammen mit dem Sensor installiert. Da der Sensor eine genau auf den Scheibentyp abgestimmte Ausrichtung aufweisen muss, ist diese Art der Montage aufwendig.

Der vorliegenden Erfindung liegt die Aufgabe zugrunde, eine weiter verbesserte Fahrzeugscheibe mit Lichtleitkörper bereitzustellen, wobei insbesondere die Verbindung zwischen Fahrzeugscheibe und Lichtleitkörper verbessert ist.

Die Aufgabe der vorliegenden Erfindung wird erfindungsgemäß durch eine Fahrzeugscheibe gemäß Anspruch 1 gelöst. Bevorzugte Ausführungen gehen aus den Unteransprüchen hervor.

Die erfindungsgemäße Fahrzeugscheibe ist zur Abtrennung eines Fahrzeug-Innenraums von einer äußeren Umgebung vorgesehen. Die Fahrzeugscheibe ist also eine Fensterscheibe, die in eine Fensteröffnung der Fahrzeugkarosserie eingesetzt ist oder dafür vorgesehen ist. Die erfindungsgemäße Fahrzeugscheibe ist insbesondere eine Windschutzscheibe eines Kraftfahrzeugs. Die Fahrzeugscheibe umfasst mindestens eine Glasscheibe. Diejenige Oberfläche der Glasscheibe beziehungsweise Fahrzeugscheibe, welche in Einbaulage der äußeren Umgebung des Fahrzeugs zugewandt ist, wird als außenseitige Oberfläche bezeichnet. Diejenige Oberfläche, welche in Einbaulage dem Innenraum des Fahrzeugs zugewandt ist, wird als innenraumseitige Oberfläche bezeichnet.

Die Fahrzeugscheibe ist insbesondere dafür vorgesehen und geeignet, dass ein Sensor an ihrer innenraumseitigen Oberfläche befestigt wird. Dazu kann die innenraumseitige Oberfläche der Glasscheibe mit geeigneten Halterungen ausgestattet sein, beispielsweise mit einem *Bracket* oder Gehäuse. Der Bereich der Fahrzeugscheibe, der im Detektionsstrahlengang des Sensors angeordnet ist beziehungsweise dafür vorgesehen ist, wird als Sensorbereich oder Sensorfenster bezeichnet. Strahlung, die im Sensorbereich durch die Fahrzeugscheibe tritt, wird durch den Sensor detektiert.

Die erfindungsgemäße Fahrzeugscheibe umfasst außerdem einen Lichtleitkörper, der auf einem Bereich der innenraumseitigen Oberfläche der Glasscheibe angeordnet ist. Der besagte Bereich der Glasscheibe entspricht mindestens dem Sensorbereich, kann aber auch größer sein. Die Größe des besagten Bereichs der Glasscheibe beträgt mindestens 4 cm², beispielsweise von 10 cm² bis 100 cm², bevorzugt von 25 cm² bis 50 cm².

Der Lichtleitkörper enthält oder besteht aus Glas. Der Lichtleitkörper ist dafür vorgesehen, Strahlung, die von außen durch die Fahrzeugscheibe tritt und durch den Sensor detektiert werden soll, abzulenken, insbesondere von der Scheibe wegzubrechen, so dass der Anstellwinkel des Sensors vergrößert wird. Da sich der Sensorbereich aus der Schnittfläche der Glasscheibe durch den Detektionskegel des Sensors ergibt, führt ein größerer Anstellwinkel zu einem kleineren Sensorbereich. Der Bereich der Fahrzeugscheibe, der zur Detektion verwendet wird und üblicherweise von einem opaken Abdeckdruck umgeben ist, um die dahinterliegenden Sensoren zu verdecken, kann so verkleinert werden, wodurch die Gesamt-Lichttransmission und das ästhetische Erscheinungsbild der Fahrzeugscheibe verbessert wird. Die Erfinder haben erkannt, dass mit einer Neigung des Sensors von 5° gegenüber der Horizontalen eine Verkleinerung des Sensorbereichs von über 50 % erreicht werden kann.

Der Lichtleitkörper weist zwei Oberflächen auf, durch die die Strahlung auf dem Weg von der Glasscheibe zum Sensor hindurchtritt: eine erste, zur Glasscheibe hingewandte Oberfläche, durch die die Strahlung in den Lichtleitkörper eintritt, und eine zweite, von der Glasscheibe abgewandte Oberfläche, durch die die Strahlung aus dem Lichtleitkörper austritt. Die erste Oberfläche kann daher auch als Eintrittsfläche und die zweite Oberfläche als Austrittsfläche bezeichnet werden. Der Lichtleitkörper ist über die zur Glasscheibe hingewandte Eintrittsfläche mit der Glasscheibe verbunden, während der Sensor auf die von der Glasscheibe abgewandte Austrittsfläche gerichtet ist.

Die Eintrittsfläche und die Austrittsfläche des Lichtleitkörpers müssen einen Winkel größer 0° miteinander einschließen, um die gewünschte Ablenkung des Detektionsstrahlengangs zu erreichen. Dieser Winkel wird im Sinne der Erfindung als Keilwinkel bezeichnet. Der Lichtleitkörper ist dabei so angeordnet, dass in der Richtung von der Unterkante zur Oberkante der Glasscheibe die Dicke des Lichtleitkörpers abnimmt. Die Oberkante ist dabei diejenige Seitenkante, die dafür vorgesehen ist, in Einbaulage nach oben zum Fahrzeugdach zu weisen (Dachkante). Die Unterkante ist diejenige Seitenkante, die dafür vorgesehen ist, in Einbaulage nach unten zum Motorraum zu weisen (Motorkante).

Außer dem Keilwinkel bestehen keine weiteren Anforderungen an die geometrische Ausgestaltung des Lichtleitkörpers. Der Lichtleitkörper kann eine einfache Keilform mit einem dreieckigen Querschnitt aufweisen, aber auch einen trapezförmigen oder sogar höherpolygonalen Querschnitt.

Je größer der Keilwinkel ist, desto stärker ist die Ablenkung der Strahlung und desto ausgeprägter ist der erfinderische Effekt. Allerdings steigt mit dem Keilwinkel auch die Ausdehnung des Lichtleitkörpers zwischen Glasscheibe und Sensor. Der Platzbedarf setzt der Größe des Keilwinkels daher Grenzen. Der Keilwinkel sollte mindestens 2°, bevorzugt mindestens 10° betragen, um eine vorteilhafte Ablenkung der Strahlung zu bewirken. Der Keilwinkel beträgt beispielsweise von 2° bis 30°, bevorzugt von 10° bis 25°.

Erfindungsgemäß ist der Lichtleitkörper mittels Laserschweißen an der innenraumseitigen Oberfläche der Glasscheibe befestigt. Dadurch wird eine sehr stabile Verbindung zwischen Glasscheibe und Lichtleitkörper gewährleistet. Der Lichtleitkörper kann frühzeitig an der Glasscheibe befestigt und mit dieser zusammen transportiert werden. Beim Einbau der Scheibe in das Fahrzeug muss nur noch der Sensor hinter dem Lichtleitkörper befestigt werden. Das Ankleben des Lichtleitkörpers am Einsatzort und die aufwendige Anpassung der Kameraposition entfallen, wodurch der Einbau der Scheibe mit dem Sensor in das Fahrzeug erleichtert wird.

Unter der erfindungsgemäßen Glasscheibe wird eine Scheibe, insbesondere Fensterscheibe, verstanden, die überwiegend aus Glas besteht. Die Glasscheibe kann eine einzelne monolithische Scheibe aus Glas sein, der Begriff schließt aber auch Scheiben ein, die neben dem Glas weitere Materialien beinhalten, beispielsweise bedruckte oder beklebte Gläser oder Glaslaminate.

In einer bevorzugten Ausgestaltung ist die Glasscheibe ein solches Glaslaminat, nämlich ein Verbundglas, wie es im Fahrzeugbereich insbesondere für Windschutzscheiben üblich ist. Das Verbundglas umfasst eine Außenscheibe aus Glas und einer Innenscheibe aus Glas, die über eine thermoplastische Zwischenschicht miteinander verbunden sind. Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Ist die Glasscheibe keine monolithische Scheibe, sondern ein Glaslaminat, so sollten innerhalb des Glaslaminats signifikanten Brechungsindexunterschiede auftreten. Dies ist bei typischen Fahrzeug-Verbundgläsern gewährleistet. Der maximale Unterschied der Brechungsindizes der Bestandteile des Glaslaminats im Strahlengang des Detektors sollte höchstens 0,05 betragen.

In einer vorteilhaften Ausgestaltung entspricht der Brechungsindex des Lichtleitkörpers im Wesentlichen dem Brechungsindex der Glasscheibe. Das bedeutet im Sinne der Erfindung, dass der Unterschied der Brechungsindizes von Lichtleitkörper und Glasscheibe beziehungsweise ihrer einzelnen Bestandteile im Falle eines Glaslaminats) höchstens 0,05 betragen darf. Für die erfindungsgemäße strahlungslenkende Wirkung des Lichtleitkörpers ist die Abstimmung der Brechungsindizes zwar nicht zwingend erforderlich, jedoch kann hierdurch insbesondere eine chromatische Aberration vermieden werden. Ein großer Vorteil des Laserschweißens gegenüber anderen Befestigungsmethoden wie beispielsweise über einen Klebstoff ist es, dass Brechungsindex-Differenzen vermieden werden können. Der Brechungsindex im Sinne der Erfindung wird bei einer Wellenlänge von 550 nm gemessen.

In einer bevorzugten Ausgestaltung enthält beziehungsweise besteht der Lichtleitkörper aus Kalk-Natronglas, Borosilikatglas, Aluminosilikatglas oder Quarzglas, besonders bevorzugt Kalk-Natronglas. Für das Laserschweißen ist es besonders vorteilhaft, wenn der Lichtleitkörper die gleiche Glassorte enthält wie die Glasscheibe.

Die Glasscheibe enthält typischerweise Kalk-Natronglas, Borosilikatglas, Aluminosilikatglas oder Quarzglas, besonders bevorzugt Kalk-Natronglas, wie es für Fensterscheiben üblich ist. Kalk-Natron-Glas weist typischerweise Brechungsindizes von 1,5 bis 1,55 auf, insbesondere 1,52. Es können grundsätzlich aber auch andere Glassorten verwendet werden, wie Borosilikatglas (Brechungsindex beispielsweise 1,47), Aluminosilikatglas (Brechungsindex beispielsweise 1,5) oder Quarzglas (Brechungsindex beispielsweise 1,46).

Ist die Glasscheibe eine Verbundscheibe, so enthält die thermoplastische Zwischenschicht bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht kann aus einer Folie ausgebildet sein mit einer Dicke von bevorzugt 0,2 mm bis 2 mm, besonders bevorzugt von 0,3 mm bis 1 mm, beispielsweise 0,38 mm oder 0,76 mm. Die Zwischenschicht kann auch aus mehreren übereinandergelegten Folien ausgebildet sein oder aus Schichten unterschiedlichen Materials ausgebildet sein, wie es beispielsweise bei Folien mit geräuschmindernden Eigenschaften der Fall ist. Die Dicke der Außenscheibe und der Innenscheibe beträgt typischerweise von 0,5 mm bis 5 mm, bevorzugt von 1 mm bis 3 mm.

Die zur Glasscheibe gewandte Eintrittsfläche des Lichtleitkörpers und der Bereich der innenraumseitigen Oberfläche der Glasscheibe, an dem der Lichtleitkörper befestigt ist, sind vorteilhafterweise parallel, so dass eine optimale Verbindung gewährleistet ist. Da Fahrzeugscheiben typischerweise gekrümmt sind, weist die Eintrittsfläche des Lichtleitkörpers bevorzugt ebenfalls eine Krümmung auf. Die Krümmung der Eintrittsfläche des Lichtleitkörpers ist dabei komplementär zur Krümmung des Bereichs der innenraumseitigen Oberfläche der Glasscheibe, auf dem der Lichtleitkörper angebracht ist. Unter komplementären Krümmungen werden Krümmungen von im Wesentlichen gleichem Krümmungsradius und gegensätzlicher Konvexität/Konkavität verstanden. Da die innenraumseitige Oberfläche von Fahrzeugscheiben typischerweise konkav gekrümmt sind, ist die Eintrittsfläche des Lichtleitkörpers bevorzugt konvex gekrümmt.

In einer vorteilhaften Ausgestaltung ist die von der Glasscheibe abgewandte Austrittsfläche des Lichtleitkörpers als optische Linse ausgebildet. Die Austrittsfläche weist also eine konvexe oder konkave Krümmung auf. Insbesondere ist die Austrittsfläche konvex gekrümmt, um eine Fokussierung der durch den Lichtleitkörper tretenden Strahlung zu bewirken. Der Vorteil besteht darin, dass das typischerweise vorhandene optische System des Sensors vereinfacht gestaltet werden kann, da eine der Linsen direkt in den Lichtleitkörper integriert ist.

Laserschweißen ist eine Technik, bei der ein Laserstrahl auf die Grenzfläche der beiden zu verbindenden Werkstücke fokussiert wird, welche dadurch gleichsam lokal aufgeschmolzen wird, was im Anschluss zu einer dauerhaft stabilen Verbindung führt. In einer bevorzugten Ausführung wird nicht die gesamte Grenzfläche zwischen Lichtleitkörper und Glasscheibe mit dem Laser behandelt, sondern es wird lediglich eine umlaufende Schweißnaht um Randbereich der Grenzfläche, bevorzugt entlang der Seitenkanten der Grenzfläche erzeugt. Dies ist für die stabile Verbindung ausreichend und vereinfacht den Schweißvorgang. Außerdem wird die optische Qualität der Glaselemente im Detektionsstrahlengang gewahrt. Erfindungsgemäß liegt die Eintrittsfläche des Lichtleitkörpers vollflächig auf dem Bereich der innenraumseitigen Oberfläche der Glasscheibe auf und ist mittels einer umlaufenden peripheren Schweißnaht mit der innenraumseitigen Oberfläche verbunden.

Entlang der Schweißnaht ist ein Haftvermittler zwischen Glasscheibe und Lichtleitkörper angeordnet, insbesondere Glasfritten. Dadurch wird die Verbindung der beiden Werkstücke erleichtert und der Schweißvorgang vereinfacht. Der Haftvermittler enthält erfindungsgemäß Glasfritten.

Ein weiterer Aspekt der Erfindung ist eine Anordnung, umfassend eine erfindungsgemäße Fahrzeugscheibe und einen daran angebrachten optischen Sensor, der an der innenraumseitigen Oberfläche befestigt ist und auf den Lichtleitkörper, insbesondere die Austrittsfläche des Lichtleitkörpers gerichtet ist. Der Detektionsstrahlengang des Sensors verläuft also durch den Lichtleitkörper hindurch. Der optische Sensor ist bevorzugt der Sensor einer optischen Kamera, das heißt einer Kamera mit Empfindlichkeit im sichtbaren Spektralbereich. Der Sensor kann beispielsweise ein CCD- oder CMOS-Sensor sein. Die Kamera kann beispielsweise eine Fahrspur-Kamera oder eine Kamera für ein Augmented Reality-Head-Up-Displays sein.

Bei einer üblichen Fahrzeug-Verbundscheibe, die typischerweise aus zwei Scheiben aus Kalk-Natronglas und eine PVB-Zwischenschicht besteht, treten keine signifikanten Änderungen des Brechungsindex innerhalb der Verbundscheibe auf. Ein horizontal durch die Scheibe tretender Strahl wird dadurch parallelversetzt, bleibt aber auch nach Durchtritt durch die Scheibe horizontal, so dass der Sensor parallel zur Horizontalen ausgerichtet werden muss, um den Strahl zu detektieren. Durch den erfindungsgemäßen Lichtleitkörper kann der Sensor in einem größeren Winkel zur Fahrzeugscheibe angeordnet werden, wodurch der Sensorbereich der Fahrzeugscheibe kleiner wird. Dieser Effekt ist aus einfachen geometrischen Überlegungen heraus verständlich: der Sensorbereich entspricht der Schnittfläche durch den Detektionskegel des Sensors an der Position der Fahrzeugscheibe. Diese Fläche ist minimal bei einem Winkel von 90° und nimmt mit kleiner werdendem Winkel zu. Typischerweise sind Windschutzscheiben mit einem Einbauwinkel zur Vertikalen von etwa 60° angeordnet. Bei gekrümmten Scheiben wird zur Bestimmung des Einbauwinkels die Tangentialebene in der geometrischen Scheibenmitte herangezogen. Ein herkömmlicher nach vorne gerichteter Sensor mit horizontaler Ausrichtung schließt folglich einen Winkel von etwa 30° zur Windschutzscheibe ein. Durch die Ablenkung des Detektionsstrahlengangs mittels des erfindungsgemäßen Lichtleitkörpers kann der Winkel vorteilhaft vergrößert werden. Dadurch nimmt der Sensorbereich weniger Fläche der Fahrzeugscheibe ein, wodurch folglich auch der Abdeckdruck zur Verdeckung des Sensors kleiner ausgestaltet werden kann. Insbesondere, wenn mehrere Sensoren benachbart zueinander vorhanden sind, ist die Erfindung besonders vorteilhaft, weil ein übermäßig großer Abdeckdruck zur Kaschierung der Gesamtheit der Sensorbereiche vermieden werden kann. In einer bevorzugten Ausgestaltung ist der Sensor mit einem Winkel von 45° bis 90° zur Glasscheibe angeordnet. Zur exakten Bestimmung auch bei gekrümmten Scheiben ist der Winkel zwischen der zentralen Detektionsrichtung des Sensors (Mitte des Detektionskegels) und der Tangentialebene in der geometrischen Mitte des Sensorbereichs auf der innenraumseitigen Oberfläche der Glasscheibe heranzuziehen.

Die Glasscheibe kann klar und farblos, aber auch getönt, getrübt oder gefärbt sein. Die Gesamttransmission durch die Glasscheibe beträgt in einer bevorzugten Ausgestaltung größer 70%, insbesondere wenn sie eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Glasscheibe kann nicht vorgespannt, teilvorgespannt oder vorgespannt sein.

Die Fahrzeugscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Fahrzeugscheibe kann aber auch plan sein, beispielsweise wenn es als Scheibe für Busse, Züge oder Traktoren vorgesehen ist.

Die Fahrzeugscheibe weist bevorzugt einen Abdeckdruck auf. Abdeckdrucke sind für Fahrzeugscheiben außerhalb des zentralen Sichtbereichs üblich, um Anbauteile zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Bevorzugt umrahmt der Abdeckdruck den Sensorbereich der Fahrzeugscheibe umlaufend, um den dahinterliegenden Sensor zu verdecken.

Die Erfindung umfasst außerdem ein Verfahren zur Herstellung einer Fahrzeug-Verbundscheibe, wobei
(a) ein Lichtleitkörper aus Glas auf einem Bereich einer innenraumseitigen Oberfläche einer Glasscheibe angeordnet wird, wobei die zur Glasscheibe hingewandte Oberfläche und die von der Glasscheibe abgewandte Oberfläche des Lichtleitkörpers einen Keilwinkel einschließen und in der Richtung von einer Unterkante zu einer Oberkante der Glasscheibe die Dicke des Lichtleitkörpers abnimmt,
(b) der Lichtleitkörper mittels Laserschweißen an der Glasscheibe befestigt wird.

Beim Laserschweißen wird die Strahlung eines Lasers auf die Grenzfläche zwischen Glasscheibe und Lichtleitkörper fokussiert, wodurch die beiden Glasoberflächen dauerhaft stabil miteinander verbunden werden. Die Laserstrahlung wird umlaufend entlang der Seitenkanten der Grenzfläche bewegt, oder im Randbereich der Grenzfläche in der Nähe der und im Wesentlichen parallel zu den Seitenkanten, um eine umlaufende, periphere Schweißnaht zu erzeugen. Der Laserstrahlung kann durch die Glasscheibe hindurch, durch den Lichtleitkörper hindurch oder auch seitlich auf die Grenzfläche gerichtet werden.

Das Laserschweißen kann durch ein Vorheizen der Glasscheibe auf beispielsweise 200°C bis 300 °C erleichtert werden. Das erfindungsgemäße Verfahren wird aber bevorzugt bei Raumtemperatur durchgeführt. Zum einen entfällt dadurch das zeitaufwendige und energieintensive Vorheizen. Zum anderen bestünde bei einer fertig bereitgestellten, gebogenen und gegebenenfalls laminierten Fahrzeugscheibe durch das Erhitzen die Gefahr von optischen Beeinträchtigungen oder Delamination. Das Schweißen bei Raumtemperatur kann durch geeignete Haftvermittler vereinfacht werden.

Erfindungsgemäß wird vor dem Laserschweißen ein solcher Haftvermittler zwischen dem Lichtleitkörper und der Glasscheibe zumindest im Bereich der zu erzeugenden Schweißnaht angeordnet. Als Haftvermittler eignen sich insbesondere Glasfritten, welche die Verbindung der beiden Glasoberflächen begünstigen. Der Haftvermittler enthält erfindungsgemäß Glasfritten.

Die Glasfritten können rein in Pulverform aufgebracht werden. Einfacher zu handhaben ist aber eine Paste, die außer den Glasfritten Bindemittel, Lösungsmittel, Dispersionsmittel oberflächenaktive Stoffe oder weitere Bestandteile enthalten kann. Eine solche Paste lässt sich auch gut automatisiert applizieren, beispielsweise durch Siebdruckverfahren, Rakeln oder Extrusion mittels einer robotergeführten Düse. Je nach Zusammensetzung der Paste kann ein Vorheizen zur Beseitigung der organischen Bestandteile vorteilhaft oder erforderlich sein.

Zum Laserschweißen wird bevorzugt ein Laser mit Strahlung im Infrarotbereich verwendet. Die Wellenlänge beträgt größer 800 nm, beispielsweise von 800 nm bis 20 µm. Besonders gute Ergebnisse werden mit einem Nd:YAG-Laser erreicht (1064 nm). Alternativ sind Diodenlaser besonders geeignet.

Der Laser kann im Dauerstrichbetrieb oder gepulst betrieben werden. Durch einen gepulsten Betrieb können höhere Leistungsdichten erreicht werden, was für das Laserschweißen vorteilhaft ist.

Die Ausgangsleistung des Lasers beträgt bevorzugt von 20 W bis 1 kW, beispielsweise von 50 W bis 500 W. Mit solchen Leistungen kann eine gute Schweißverbindung erzeugt werden. Damit werden besonders gute Ergebnisse erreicht.

Vor dem Anschweißen kann der Lichtleitkörper bearbeitet werden, beispielsweise durch Schleifen. So kann beispielsweise die Austrittsfläche zu einer Linse geschliffen werden oder die Eintrittsfläche mit einer Krümmung versehen werden, um sie an die Glasscheibe anzupassen.

Die Erfindung umfasst außerdem die Verwendung einer erfindungsgemäßen Fahrzeugscheibe als Windschutzscheibe eines Fahrzeugs, bevorzugt eines Kraftfahrzeugs. An der innenraumseitigen Oberfläche der Glasscheibe ist bevorzugt ein optischer Sensor befestigt, der auf die von der Fahrzeugscheibe abgewandte Oberfläche des Lichtleitkörpers gerichtet ist. Der Sensor ist bevorzugt ein CCD- oder CMOS-Chip einer optischen, das heißt im sichtbaren Spektralbereich empfindlichen Kamera, die beispielsweise eine Fahrspur-Kamera oder eine Kamera für ein *Augmented Reality*-Head-Up-Display ist.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Fahrzeugscheibe,
- Fig. 2: ein Flussdiagramm einer Ausführungsform des erfindungsgemäßen Verfahrens und
- Fig. 3: einen Querschnitt durch die Fahrzeugscheibe während des Anbringens des Lichtleitkörpers 4.

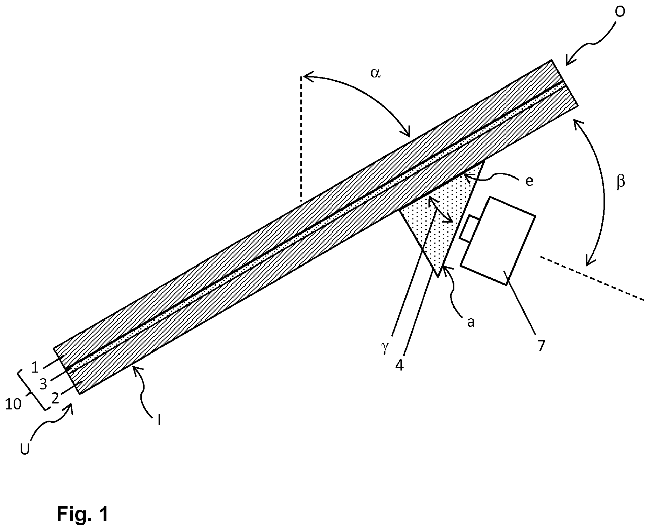

Fig. 1 zeigt einen Querschnitt einer erfindungsgemäßen Fahrzeugscheibe. Die Fahrzeugscheibe ist als Windschutzscheibe eines Personenkraftwagens vorgesehen und umfasst eine Glasscheibe 10, die als Verbundglas ausgebildet ist. Die Verbundscheibe besteht aus einer Außenscheibe 1 und einer Innenscheibe 2, die mittels einer thermoplastischen Zwischenschicht 3 flächig miteinander verbunden sind. Die Innenscheibe 2 ist in Einbaulage dem Innenraum des Fahrzeugs zugewandt. Die Außenscheibe 1 ist in Einbaulage der äußeren Umgebung des Fahrzeugs zugewandt. Die Außenscheibe 1 und die Innenscheibe 2 bestehen aus Kalk-Natron-Glas und weisen beispielsweise eine Dicke von 2,1 mm auf. Die Zwischenschicht 3 ist aus einer 0,76 mm dicke PVB-Folie ausgebildet. Die Glasscheibe 10 weist eine Oberkante O und eine Unterkante U auf. Die Oberkante O weist in Einbaulage nach oben zum Fahrzeugdach, die Unterkante U weist in Einbaulage nach unten zum Motorraum.

An der innenraumseitigen Oberfläche I der Glasscheibe 10 beziehungsweise der Innenscheibe 2 ist eine Sensor 7 angeordnet. Der Sensor 7 ist beispielsweise eine Fahrspurkamera. Die Detektionsrichtung des Sensors 7 ist außenseitig der Fahrzeugscheibe in etwa horizontal nach vorne gerichtet. Strahlung, die in einem sogenannten Sensorbereich horizontal durch die Glasscheibe 10 tritt, wird durch die Kamera detektiert.

Die Fahrzeugscheibe ist, wie für Windschutzscheiben üblich, mit einem Einbauwinkel α von 60° zur Vertikalen in das Fahrzeug eingebaut. Bei einer herkömmlichen Fahrzeugscheibe müsste der Sensor 7 darum horizontal ausgerichtet werden, was zu einem spitzen Winkel β von etwa 30° zur innenraumseitigen Oberfläche I führen würde.

Bei der erfindungsgemäßen Fahrzeugscheibe ist auf der innenraumseitigen Oberfläche I der Glasscheibe 10 im Sensorbereich ein Lichtleitkörper 4 angeordnet, welcher die zu detektierende Strahlung ablenkt. Der Lichtleitkörper 4 weist eine zur Glasscheibe 10 hingewandte Oberfläche e (Eintrittsfläche) auf, über die die Strahlung in ihn eintritt, und eine von der Glasscheibe 10 abgewandte Oberfläche a (Austrittsfläche), über die die Strahlung aus ihm austritt. Der Lichtleitkörper 4 ist über seine Eintrittsfläche e mit der Glasscheibe 10 verbunden, der Sensor 7 ist auf die Austrittsfläche a des Lichtleitkörpers 4 gerichtet. Die Eintrittsfläche e und die Austrittsfläche a sind mit einem Keilwinkel γ von beispielsweise 25° zueinander angeordnet. Der Lichtleitkörper 4 wirkt gleichsam als optisches Prisma. Durch den Lichtleitkörper 4 wird die horizontal von außen durch die Glasscheibe 10 tretende Strahlung gebrochen und der Sensor 7 kann in einem weniger spitzen Winkel β von beispielsweise 60° zur innenraumseitigen Oberfläche I der Glasscheibe 10 angeordnet werden. Dadurch kann der Platzbedarf des Sensorbereichs auf der Fahrzeugscheibe vorteilhaft verringert werden. Der Sensorbereich ergibt sich nämlich aus der Schnittfläche, die aus dem Schnitt der Glasscheibe 10 durch den Detektionskegel des Sensors 7 hervorgeht. Die Größe dieser Schnittfläche ist minimal bei einem Winkel β von 90° und nimmt mit abnehmendem Wert von β zu.

In der dargestellten Ausgestaltung ist der Lichtleitkörper 4 als einfaches Prisma mit dreieckigem Querschnitt ausgeführt. Es sind aber auch andere Formen denkbar, beispielsweise ein Prisma mit trapezförmiger Grundfläche, solange der Keilwinkel γ zwischen Eintrittsfläche e und Austrittsfläche a vorhanden ist. Der Lichtleitkörper 4 ist so auf der Glasscheibe 10 angeordnet, dass die seine Dicke in der Richtung von der Unterkannte U zur Oberkante O abnimmt.

Der Lichtleitkörper 4 besteht aus Kalk-Natron-Glas, ist also hinsichtlich seiner optischen und mechanischen Eigenschaften optimal auf die Glasscheibe 10 abgestimmt. Er ist mittels einer umlaufenden, peripheren Laser-Schweißnaht mit der Glasscheibe 10 verbunden.

Die Glasscheibe 10 ist in der Zeichnung der Einfachheit halber plan dargestellt. In der Realität weisen Windschutzscheiben aber typischerweise eine Krümmung auf. Die innenraumseitige Oberfläche I der Glasscheibe 10 im Sensorbereich und die Eintrittsfläche e des Lichtleitkörpers sind aufeinander abgestimmt und komplementär zueinander ausgebildet, so dass die zu verbindenden Oberflächen parallel zueinander sind und schlüssig miteinander in Kontakt gebracht werden können.

Die Oberfläche a des Lichtleitkörpers kann optional zur einer Linse geschliffen sein, so dass der Lichtleitkörper gleichzeitig Teil des optischen Systems des Sensors 7 ist.

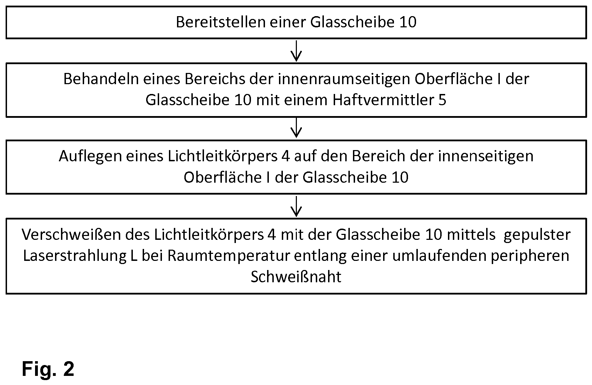

Fig. 2 zeigt ein Flussdiagramm eines Ausführungsbeispiels des erfindungsgemäßen Verfahrens zur Herstellung einer Fahrzeug-Verbundscheibe. Zunächst wird eine Glasscheibe 10 bereitgestellt. Die Glasscheibe 10 kann eine Verbundglasscheibe sein aus zwei Einzelscheiben aus Kalk-Natron-Glas, die über eine PVB-Zwischenschicht miteinander verbunden sind. Eine solche Verbundglasscheibe wird mit fachüblichen Verfahren hergestellt unter Einwirkung Hitze, Vakuum und/oder Druck, beispielsweise mit Autoklavverfahren, Vakuumsack- oder Vakuumringverfahren oder Kalanderverfahren. Die innenraumseitige Oberfläche I der Glasscheibe 10 wird anschließend vorbereitet, indem ein Haftvermittler 5 auf den Sensorbereich aufgebracht wird. Der Haftvermittler 5 kann eine Paste mit Glasfritten sein. Es genügt, den Haftvermittler 5 rahmenartig aufzubringen entlang der geplanten Schweißnaht. Dann wird der Lichtleitkörper 4 auf den Sensorbereich mit dem Haftvermittler 5 aufgelegt. Zum anschließenden Verschweißen wird infrarote Laserstrahlung L auf die Eintrittsfläche 2 des Lichtleitelements 4 fokussiert, was durch die Glasscheibe 10 hindurch oder durch das Lichtleitelement 4 hindurch erfolgen kann. Die Laserstrahlung L wird anschließend entlang der Seitenkante der Eintrittsfläche e des Lichtleitelements bewegt. Glasscheibe 10 und Lichtleitelement 4 werden so unter Mitwirkung des Haftvermittlers 5 miteinander verschweißt.

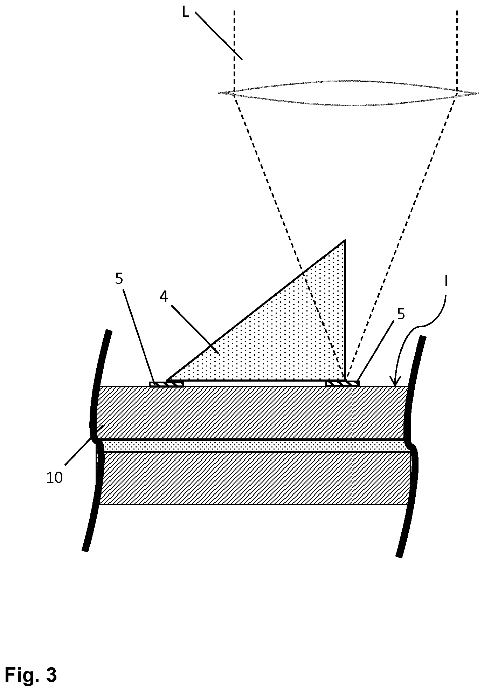

Fig. 3 zeigt einen Querschnitt der Fahrzeugscheibe während des Laserschweißens. Im Randbereich ist zwischen der Glasscheibe 10 und dem Lichtleitkörper 4 ein Haftvermittler 5 angeordnet. Der Haftvermittler 5 ist eine Paste enthaltend Glasfritten. Die Strahlung L eines gepulsten Nd:YAG-Lasers ist durch den Lichtleitkörper 4 hindurch auf die Eintrittsfläche e des Lichtleitkörpers 4 fokussiert. Die Laserstrahlung L wird dann entlang der Seitenkante der Eintrittsfläche e bewegt, so dass sich mit Hilfe des Haftvermittlers 5 eine umlaufende Schweißnaht ausbildet.

### Beispiel:

Der erfindungsgemäße Effekt wird anhand einer Windschutzscheibe mit einem Einbauwinkel α von 60° verdeutlicht. Hinter der Windschutzscheibe ist eine Kamera angebracht. Ohne erfindungsgemäßen Lichtleitkörper 4 ergeben sich eine Größe des Kamerafensters der Windschutzscheibe von 40 cm² und eine nötige Gesamtfläche des Schwarzdrucks im Kamerabereich von 190 cm². Mit einem erfindungsgemäßen Lichtleitkörper mit Keilwinkel γ von 25° und Optimierung des Einbauwinkels β verkleinert sich die Größe des Kamerafensters auf 1 cm² und die nötige Gesamtfläche des Schwarzdrucks auf 130 cm².

### Bezugszeichenliste:

- (10): Glasscheibe
- (1): Außenscheibe
- (2): Innenscheibe
- (3): thermoplastische Zwischenschicht
- (4): Lichtleitkörper
- (5): Haftvermittler
- (7): Sensor
- (α): Einbauwinkel der Fahrzeugscheibe 10
- (β): Einbauwinkel des Sensors/der Kamera 7
- (γ): Keilwinkel des Lichtleitkörpers 4
- O: Oberkante/Dachkante der Fahrzeugscheibe 10
- U: Unterkante/Motorkante der Fahrzeugscheibe 10
- I: innenraumseitige Oberfläche der Fahrzeugscheibe 10
- L: Laserstrahlung
- e: zur Fahrzeugscheibe 10 hingewandte Oberfläche des Lichtleitkörpers 4 (Eintrittsfläche)
- a: von der Fahrzeugscheibe 10 abgewandte Oberfläche des Lichtleitkörpers 4 (Austrittsfläche)

## Patentansprüche

1. Fahrzeugscheibe zur Abtrennung eines Fahrzeug-Innenraums von einer äußeren Umgebung, umfassend eine Glasscheibe (10) mit einem Lichtleitkörper (4) aus Glas auf einem Bereich der innenraumseitigen Oberfläche (I) der Glasscheibe (10),
wobei die zur Glasscheibe (10) hingewandte Oberfläche (e) und die von der Glasscheibe (10) abgewandte Oberfläche (a) des Lichtleitkörpers (4) einen Keilwinkel (γ) einschließen, so dass in der Richtung von einer Unterkante (U) zu einer Oberkante (O) der Glasscheibe (10) die Dicke des Lichtleitkörpers (4) abnimmt,
wobei der Lichtleitkörper (4) mittels Laserschweißen an der innenraumseitigen Oberfläche (I) der Glasscheibe (10) befestigt ist,
wobei die zur Glasscheibe (10) hingewandte Oberfläche (e) des Lichtleitkörpers (4) vollflächig auf dem Bereich der innenraumseitigen Oberfläche (I) der Glasscheibe (10) aufliegt und mittels einer umlaufenden peripheren Schweißnaht mit der innenraumseitigen Oberfläche (I) verbunden ist,
**gekennzeichnet dadurch, dass** entlang der Schweißnaht ein Haftvermittler zwischen Glasscheibe (10) und Lichtleitkörper (4) angeordnet ist, der Glasfritten enthält.

2. Fahrzeugscheibe nach Anspruch 1, wobei der Brechungsindex des Lichtleitkörpers (4) im Wesentlichen dem Brechungsindex der Glasscheibe (10) entspricht.

3. Fahrzeugscheibe nach Anspruch 1 oder 2, wobei der Lichtleitkörper (4) Kalk-Natronglas, Borosilikatglas, Aluminosilikatglas oder Quarzglas enthält, bevorzugt Kalk-Natronglas.

4. Fahrzeugscheibe nach einem der Ansprüche 1 bis 3, wobei die Krümmung der zur Glasscheibe (10) hingewandten Oberfläche (e) des Lichtleitkörpers (4) zur Krümmung des Bereichs der innenraumseitigen Oberfläche (I) der Glasscheibe (10), auf dem der Lichtleitkörper (4) angebracht ist, komplementär ist.

5. Fahrzeugscheibe nach einem der Ansprüche 1 bis 4, wobei der Keilwinkel (γ) des Lichtleitkörpers (4) mindestens 2° beträgt, bevorzugt mindestens 10°.

6. Fahrzeugscheibe nach einem der Ansprüche 1 bis 5, wobei die von der Glasscheibe (10) abgewandte Oberfläche (a) des Lichtleitkörpers (4) als Linse ausgebildet ist.

7. Fahrzeugscheibe nach einem der Ansprüche 1 bis 6, wobei an der Glasscheibe (10) ein optischer Sensor (7) befestigt ist, der auf die von der Glasscheibe (10) abgewandte Oberfläche (a) des Lichtleitkörpers (4) gerichtet ist.

8. Verfahren zur Herstellung einer Fahrzeugscheibe, wobei
(a) ein Lichtleitkörper (4) aus Glas auf einem Bereich einer innenraumseitigen Oberfläche (I) einer Glasscheibe (10) angeordnet wird, wobei die zur Glasscheibe (10) hingewandte Oberfläche (e) und die von der Glasscheibe (10) abgewandte Oberfläche (a) des Lichtleitkörpers (4) einen Keilwinkel (γ) einschließen und in der Richtung von einer Unterkante (U) zu einer Oberkante (O) der Glasscheibe (10) die Dicke des Lichtleitkörpers (4) abnimmt,
(b) der Lichtleitkörper (4) mittels Laserschweißen an der Glasscheibe (I) befestigt wird,
wobei Glasfritten zwischen dem Lichtleitkörper (4) und der Glasscheibe (10) angeordnet werden.

9. Verfahren nach Anspruch 8, wobei in Schritt (b) Laserstrahlung umlaufend entlang der oder parallel zur Seitenkante der zur Glasscheibe (10) hingewandte Oberfläche (e) des Lichtleitkörpers (4) bewegt wird.

10. Verfahren nach Anspruch 8 oder 9, wobei das Laserschweißen bei Raumtemperatur durchgeführt wird.

11. Verfahren nach einem der Ansprüche 8 bis 10, wobei beim Laserschweißen ein Laser mit einer Ausgangsleistung von 20 W bis 1 kW, bevorzugt von 50 W bis 500 W verwendet wird.

12. Verwendung einer Fahrzeugscheibe nach einem der Ansprüche 1 bis 7 als Windschutzscheibe eines Fahrzeugs, bevorzugt eines Kraftfahrzeugs, wobei an der innenraumseitigen Oberfläche (l) der Glasscheibe (10) ein optischer Sensor (7) befestigt ist, der auf die von der Fahrzeugscheibe (10) abgewandte Oberfläche (a) des Lichtleitkörpers (4) gerichtet ist.

## Claims

1. Vehicle window for separating a vehicle interior from outer surroundings, comprising a glass pane (10) with a light guide body (4) made of glass on a region of the interior-side surface (I) of the glass pane (10),
wherein the surface (e) of the light guide body (4) facing the glass pane (10) and the surface (a) facing away from the glass pane (10) enclose a wedge angle (γ) such that the thickness of the light guide body (4) decreases in the direction from a lower edge (U) to an upper edge (O) of the glass pane (10),
wherein the light guide body (4) is secured to the interior-side surface (I) of the glass pane (10) by means of laser welding,
wherein the surface (e) of the light guide body (4) facing the glass pane (10) is positioned with its full surface against the region of the interior-side surface (I) of the glass pane (10) and is joined to the interior-side surface (I) by means of a circumferential peripheral weld,
**characterised in that** along the weld, an adhesion promoter that contains glass frits is arranged between the glass pane (10) and the light guide body (4).

2. Vehicle window according to claim 1, wherein the refractive index of the light guide body (4) corresponds substantially to the refractive index of the glass pane (10).

3. Vehicle window according to claim 1 or 2, wherein the light guide body (4) contains soda lime glass, borosilicate glass, aluminosilicate glass, or quartz glass, preferably soda lime glass.

4. Vehicle window according to one of claims 1 through 3, wherein the curvature of the surface (e) of the light guide body (4) facing the glass pane (10) is complementary to the curvature of the region of the interior-side surface (I) of the glass pane (10) on which the light guide body (4) is mounted.

5. Vehicle window according to one of claims 1 through 4, wherein the wedge angle (γ) of the light guide body (4) is at least 2°, preferably at least 10°.

6. Vehicle window according to one of claims 1 through 5, wherein the surface (a) of the light guide body (4) facing away from the glass pane (10) is implemented as a lens.

7. Vehicle window according to one of claims 1 through 6, wherein an optical sensor (7), which is oriented toward the surface (a) of the light guide body (4) facing away from the glass pane (10), is secured on the glass pane (10).

8. Method for producing a vehicle window, wherein
(a) a light guide body (4) made of glass is arranged on a region of an interior-side surface (l) of a glass pane (10), wherein the surface (e) facing the glass pane (10) and the surface (a) of the light guide body (4) facing away from the glass pane (10) enclose a wedge angle (γ) and the thickness of the light guide body (4) decreases in the direction from a lower edge (U) to an upper edge (O) of the glass pane (10),
(b) the light guide body (4) is secured on the glass pane (l) by means of laser welding,
wherein glass frits are arranged between the light guide body (4) and the glass pane (10).

9. Method according to claim 8, wherein in step (b) laser radiation is moved circumferentially along or parallel to the side edge of the surface (e) of the light guide body (4) facing the glass pane (10).

10. Method according to claim 8 or 9, wherein the laser welding is carried out at room temperature.

11. Method according to one of claims 8 through 10, wherein in the laser welding, a laser with an output power from 20 W to 1 kW, preferably from 50 W to 500 W is used.

12. Use of a vehicle window according to one of claims 1 through 7 as a windshield of a vehicle, preferably of a motor vehicle, wherein an optical sensor (7) that is oriented toward the surface (a) of the light guide body (4) facing away from the vehicle window (10) is secured to the interior-side surface (I) of the glass pane (10).

## Revendications

1. Vitre de véhicule pour séparer un intérieur de véhicule d'un environnement extérieur, comportant une vitre en verre (10) ayant un corps de guidage de lumière (4) en verre sur une région de la surface côté intérieur (I) de la vitre en verre (10),
dans laquelle la surface (e) du corps de guidage de lumière (4) tournée vers la vitre en verre (10) et la surface (a) du corps de guidage de lumière (4) tournée à l'opposé de la vitre en verre (10) forment un angle de coin (y), de telle sorte que l'épaisseur du corps de guidage de lumière (4) diminue dans la direction d'un bord inférieur (U) à un bord supérieur (O) de la vitre en verre (10) ;
dans laquelle le corps de guidage de lumière (4) est fixé à la surface côté intérieur (I) de la vitre en verre (10) au moyen de soudures laser ;
dans laquelle la surface (e) du corps de guidage de lumière (4) tournée vers la vitre en verre (10) s'applique avec toute sa surface sur la région de la surface côté intérieur (I) de la vitre en verre (10) et est reliée à la surface côté intérieur (I) au moyen d'une soudure périphérique circonférentielle,
**caractérisée par le fait que**
le long de la soudure, un promoteur d'adhérence qui contient des frittes de verre est disposé entre la vitre en verre (10) et le corps de guidage de lumière (4).

2. Vitre de véhicule selon la revendication 1, dans lequel l'indice de réfraction du corps de guidage de lumière (4) correspond sensiblement à l'indice de réfraction de la vitre en verre (10).

3. Vitre de véhicule selon l'une des revendications 1 ou 2, dans laquelle le corps de guidage de lumière (4) contient du verre sodocalcique, du verre borosilicaté, du verre aluminosilicaté ou du verre de quartz, de préférence du verre sodocalcique.

4. Vitre de véhicule selon l'une des revendications 1 à 3, dans laquelle la courbure de la surface (e) du corps de guidage lumière (4) tournée vers la vitre en verre (10) est complémentaire de la courbure de la région de la surface côté intérieur (I) de la vitre en verre (10) sur laquelle le corps de guidage de lumière (4) est monté.

5. Vitre de véhicule selon l'une des revendications 1 à 4, dans laquelle l'angle de coin (γ) du corps de guidage de lumière (4) est d'au moins 2°, de préférence d'au moins 10°.

6. Vitre de véhicule selon l'une des revendications 1 à 5, dans laquelle la surface (a) du corps de guidage de lumière (4) tournée à l'opposé de la vitre (10) est formée en tant que lentille.

7. Vitre de véhicule selon l'une des revendications 1 à 6, dans laquelle un capteur optique (7) est fixé sur la vitre en verre (10), lequel est orienté vers la surface (a) du corps de guidage de lumière (4) tournée à l'opposé de la vitre en verre (10).

8. Procédé de fabrication d'une vitre de véhicule, dans lequel
(a) un corps de guidage de lumière (4) en verre est disposé sur une région d'une surface côté intérieur (I) d'une vitre en verre (10), la surface (e) du corps de guidage de lumière (4) tournée vers la vitre en verre (10) et la surface (a) du corps de guidage de lumière (4) tournée à l'opposé de la vitre en verre (10) formant un angle de coin (γ) et l'épaisseur du corps de guidage de lumière (4) diminuant dans la direction d'un bord inférieur (U) à un bord supérieur (O) de la vitre en verre (10) ;
(b) le corps de guidage de lumière (4) est fixé sur la vitre en verre (10) au moyen d'un soudage laser,
des frittes de verre étant disposées entre le corps de guidage de lumière (4) et la vitre en verre (10).

9. Procédé selon la revendication 8, dans lequel, dans l'étape (b), un rayonnement laser est déplacé de façon circonférentielle le long du ou parallèlement au bord latéral de la surface (e) du corps de guidage de lumière (4) tournée vers la vitre en verre (10).

10. Procédé selon l'une des revendications 8 ou 9, dans lequel le soudage laser est effectué à température ambiante.

11. Procédé selon l'une des revendications 8 à 10, dans lequel, lors du soudage laser, un laser avec une puissance de sortie de 20 W à 1 kW, de préférence de 50 W à 500 W, est utilisé.

12. Utilisation d'une vitre de véhicule selon l'une des revendications 1 à 7 en tant que pare-brise d'un véhicule, de préférence d'un véhicule automobile, dans laquelle un capteur optique (7) est fixé à la surface côté intérieur (I) de la vitre en verre (10), lequel est orienté vers la surface (a) du corps de guidage de lumière (4) tournée à l'opposé de la vitre en verre (10).
